# EUROPEAN PATENT APPLICATION

(11) **EP 0 812 093 A2**
(43) Date of publication of application: **10.12.1997**
(21) Application number: 96119375.2
(22) Date of filing: 03.12.1996
(51) Int. Cl.: H04M 1/00

(54) **Telephone set**

(30) Priority: 07.06.1996 GB 9611940
(71) Applicant: Chairman International Limited, Harbour City, Kowloon (HK)
(72) Inventor: Chan, Billy Hok-Chiu, Harbour City, Kowloon (HK)
(74) Representative: Glawe, Delfs, Moll & Partner

(57) **Abstract**

The invention relates to a telephone set comprising a handset which incorporates normal telephone circuitry, an ear speaker 10 and a microphone 11 and switch means 13 operable to connect ear speaker 10 and the microphone 11 either to said normal telephone circuitry or to external connectors for connection to speaker and microphone connectors of a personal computer sound facility. By means of the switch 13 the user can switch between a normal telephone operating mode and a second operating mode in which the telephone set used as PC sound facility speaker/microphone.

## Description

This invention relates to a telephone set intended to be used with a personal computer for communications.

Recent software advances have made it possible for PC users to use a local connection to the internet to establish voice communication between users separated by long distances. Such communication normally involves, however, the use of loudspeaker and a microphone connected to the sound card of the PC. Where the subject matter of the communication is private or confidential it is undesirable for nearby persons to be able to hear the communication.

The present invention has for its object the provision of a telephone set which can be used to overcome this disadvantage.

A telephone set in accordance with the invention comprises a handset which incorporates normal telephone circuitry, an ear speaker and a microphone and switch means operable to connect the ear speaker and the microphone either to said normal telephone circuitry or to external connectors for connection to speaker and microphone connectors of a personal computer sound facility.

Preferably the telephone set also includes a hook switch unit arranged to be actuated when the handset is hung up.

The hook switch unit controls (a) a connection between an external microphone and the microphone connector of the PC sound facility and (b) a connection between an external loudspeaker and the speaker connector of the sound facility so that these connections are broken when the handset is removed from the cradle. When the first mentioned switch means is set to connect the handset ear speaker and the handset microphone to the normal telephone circuitry, the external loudspeakers and the microphone are simply muted. When the first mentioned switch means is set to connect the handset ear speaker and the handset microphone to the external connectors, these become connected to the PC sound facility instead of the external loudspeaker and microphone.

Preferably, the hook switch unit is mounted on a cradle for the handset, the hook switch unit having an actuating element which is displaced by the handset when it is placed on hook on the cradle.

The cradle is preferably adapted to be mounted on a PC video monitor. The cradle may include a trough portion to receive the handset and a top flange so that it can be mounted on the monitor with the top flange on the top of the monitor and the trough portion depending down one side of the monitor.

The hook switch unit is preferably detachably mounted on the cradle so that it can be located thereon in two different orientations.

An example of the invention is shown in the accompanying drawings, in which:
Figure 1 is a perspective view of the telephone handset;
Figure 2 is an elevation of the cradle and hook switch unit;
Figure 3 is a perspective view of the cradle and hook switch unit;
Figure 3a is a fragmentary section showing the mounting of the hook switch unit on the cradle;
Figure 4 is a circuit diagram of the handset circuitry; and
Figure 5 is a circuit diagram of the hook switch circuitry.

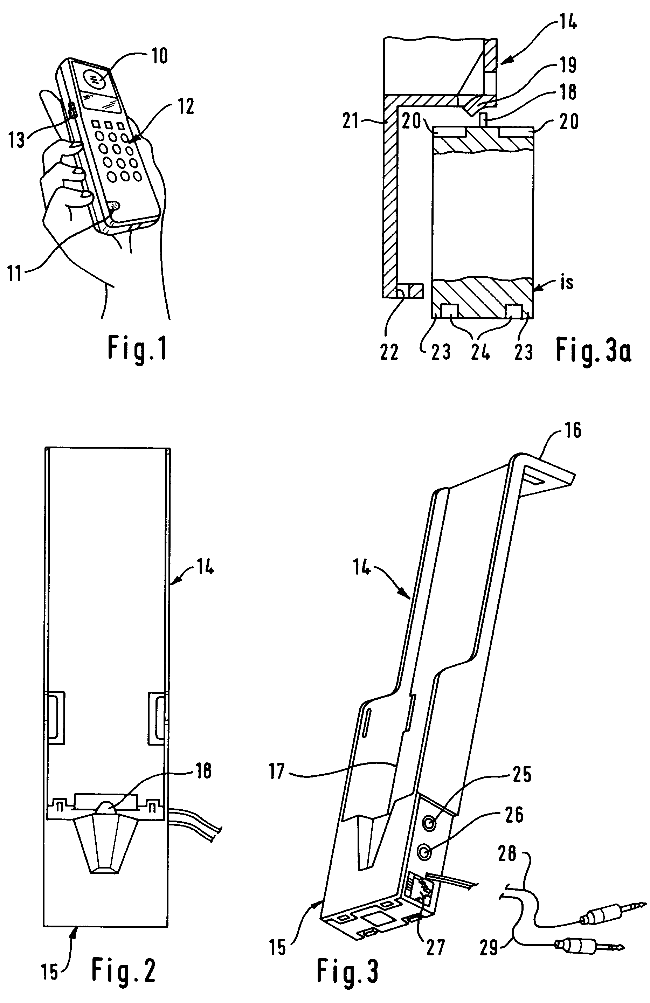

Referring firstly to Figure 1, the handset shown is a conventional handset with an ear speaker 10, a microphone 11, and a key pad 12. On one side of the handset is an additional switch 13, not provided on conventional handsets, for switching between normal telephone use and use as a PC sound facility speaker/microphone.

The cradle and hook switch unit shown in Figures 2, 3 and 3a are formed so that the hook switch unit 15 can be mounted in two alternative orientations. The cradle 14 has a top flange 16 at its upper end and a trough portion 17 at its lower end. The hook switch unit 15 is mounted at the end of the trough portion 17 with a hook switch actuation element 18 on the hook switch unit projecting into the trough portion. The hook switch unit 15 is formed in its upper face with notches 20 at front and back which can be engaged behind spring tongues 19 on the end of the cradle. At the lower end of a front flange 21 of the cradle are two eyes 22 which receive pegs 23 set in notches 24 in the lower end of the hook switch unit.

The cradle is designed to be mounted with double sided adhesive tape on a PC video monitor at whichever side the user requires, with the top flange 16 on the top face of the monitor and the trough portion 17 extending down one side face of the monitor. The hook switch unit 15 is mounted on the cradle with a back face of the hook switch unit in which various sockets 25, 26, 27 are provided is at the rear and substantially out of sight of the user. The handset is inserted downwardly into the trough portion 17 of the cradle and when pushed fully home displaces the actuating element 18 downwardly from its normal upwardly projecting "off hook" position.

In addition to the sockets for an external microphone (socket 25), an external speaker or speakers (socket 26) and a telephone line (socket 27), the back of the hook switch unit 15 also provides an exit point for cables 28, 29 with plugs for connection to the PC sound facility microphone and speaker sockets.

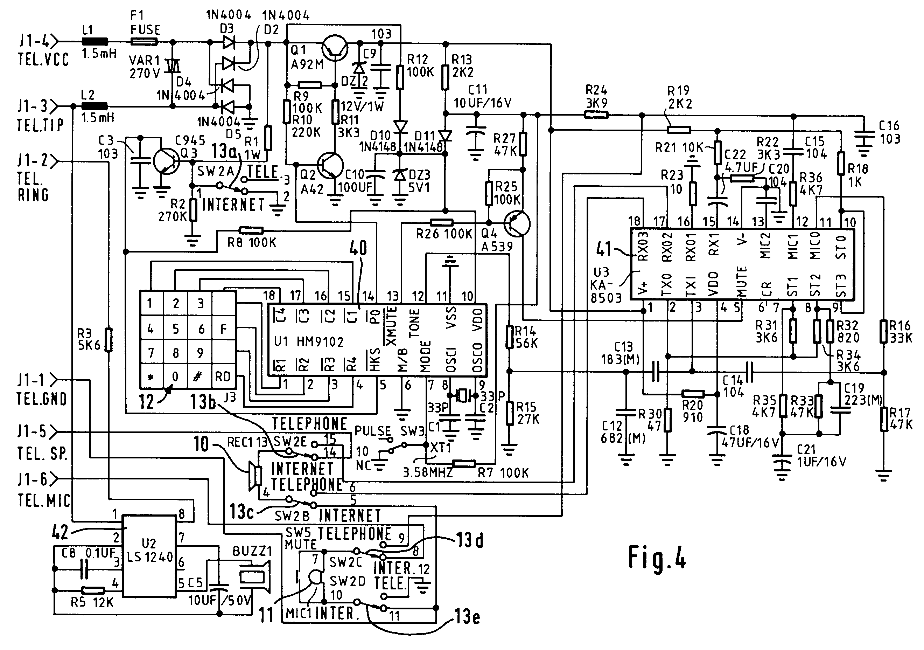

The circuit shown in Figure 4 consists largely of conventional telephone circuits including a conventional telephone dialling i.c. 40, a conventional telephone audio i.c. 41, and a conventional ringer circuit 42.

The additional switch 13 referred to above is a five-pole two-way switch with contacts 13a to 13e which has two positions referred to hereinafter as "internet" and "normal" positions. Contact 13a controls a transistor Q3 which disables the dialling i.c. 40 when the switch 13 is in an "internet" position. The contacts 13b and 13c control the connection of the internal telephone ear speaker 10. In the "normal" position of the switch 13 the ear-speaker 10 is connected to the speaker output of the audio i.c. 41. In the "internet" position the ear-speaker 10 is connected between a terminal J1-5 and a terminal J1-1 of a telephone socket for a coiled six core cable which connects the hook switch unit 15 to the handset. Contacts 13d and 13e of the switch connect the internal microphone 11 of the handset to the microphone input of the audio i.c. 41 when the switch is in the "normal" position and connect the microphone 11 between terminals J1-6 and J1-1 of the telephone socket when the switch is in the "internet" position.

It will be understood from the above that the handset can operate as a normal telephone handset when the switch 13 is in the "normal" position, but the normal telephone operation is inhibited when the switch is in the "internet" position. With switch 13 in this latter position, the microphone 11 merely provides output to terminal J1-6 and the ear-speaker 10 receives input from terminal J1-5.

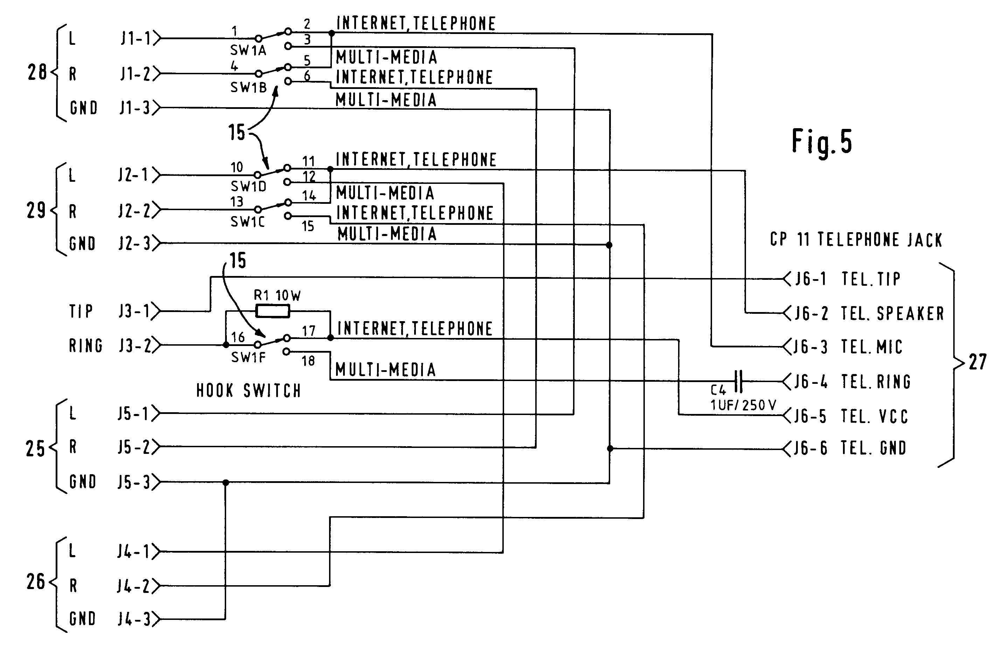

Turning now to the circuit of the hook switch unit 15 shown in Figure 5, it will be seen that the hook switch is a fire-pole two-way changeover switch controlling the connections between the cables 28, 29, the sockets 25 and 26 and the telephone socket 27 which is connected by the aforementioned coiled cable to the socket on the handset. In the on-hook position any external microphone connected to the socket 25 is connected to cable 28 so that such external microphone is connected to the microphone input of the PC sound facility, and any external speakers plugged into the socket 26 is connected to the cable 29 so that the speaker output of the PC sound facility is connected to such external speaker(s).

In this condition the external speaker(s) and microphone are active whatever the position of switch 13. When the handset is off hook, these connections are broken, so that the loudspeakers are always muted when the handset is in use. The switch 13 determines how the handset is used when off-hook only.

The telephone set described above is merely one example of a telephone set in accordance with the invention. Many differences are possible. It is not essential, for example, that the set should include a cradle/hook switch unit for mounting on a PC video monitor. The telephone set could include alternative forms of base/cradle. Moreover, the hook switch unit could be included as part of the handset itself, although the number of cables which have to be used to connect the unit to the external microphone and loudspeakers and to the PC sound facility could then be somewhat troublesome.

Although the switch 13 is referred to in the description above as having an "internet" position it should be understood that use of the telephone handset to provide the microphone and speaker for a PC sound facility is not limited to Internet voice communication applications. The handset may be used for listening privately to sound and music played on the PC and the handset microphone may be used for recording PC sound-files.

In addition to providing improved confidentiality as compared with use of normal external microphone and speakers, the use of the system described above gives the user the impression of using a normal telephone, which cannot be achieved with other "private" arrangements such as known headset/boom microphone sets.

## Claims

1. A telephone set comprising a handset which incorporates normal telephone circuitry, an ear speaker (10) and a microphone (11) and switch means (13) operable to connect the ear speaker (10) and the microphone (11) either to said normal telephone circuitry or to external connectors for connection to speaker and microphone connectors of a personal computer sound facility.

2. A telephone set as claimed in Claim 1, further comprising a hook switch unit (15) arranged to be actuated when the handset is in an on-hook position.

3. A telephone set as claimed in Claim 3, in which said hook switch unit (15) includes switch means controlling
(a) a connection between an external microphone and a microphone connector of a PC sound facility and
(b) a connection between an external loudspeaker and a speaker connector of a PC sound facility, such connections being made when the handset is in an on-hook position and interrupted when the handset is in an off-hook position.

4. A telephone set as claimed in Claim 2 or Claim 3, in which said hook switch unit (15) is separated from the handset and is mounted on a cradle for the handset, the hook switch unit having an actuating element which is displaced by the handset when it is placed on-hook on the cradle.

5. A telephone set as claimed in Claim 4, in which said cradle is adapted to be mounted on a PC video monitor.

6. A telephone set as claimed in Claim 5, in which said cradle comprises a trough portion (17) to receive the handset and a top flange at one end of the trough portion (17) such that it can be mounted on a monitor with the flange on the top of the monitor and the trough portion (17) depending therefrom down one side of the monitor, the hook switch unit (15) being mounted at the opposite end of the trough portion (17) of the cradle.

7. A telephone set as claimed in Claim 6, in which the hook switch unit (15) is detachably mounted on the cradle in either of two different orientations so that wiring connected to the hook switch unit (15) can be concealed irrespective of which side of a monitor the cradle is mounted on.

8. A telephone set substantially as hereinbefore described with reference to and as shown in the accompanying drawings.
